# FASCICULE DE BREVET EUROPEEN

(11) **EP 2 400 203 B1**
(45) Date de publication et mention de la délivrance du brevet: **07.08.2013**
(21) Numéro de dépôt: 11305803.6
(22) Date de dépôt: 24.06.2011
(51) Int. Cl.: F16M 11/14, B60R 11/02

(54) **Dispositif de support d'un appareil portable pour véhicule automobile comprenant une liaison rotule hémisphérique**
Halterungsvorrichtung für tragbares Gerät für Kraftfahrzeuge, die mit einer halbkugelförmigen Rollenverbindung ausgestattet ist
Device for supporting a portable appliance for a car including a hemispheric ball joint

(30) Priorité: 24.06.2010 FR 1055055
(43) Date de publication de la demande: 28.12.2011
(73) Titulaire: Faurecia Intérieur Industrie, 92000 Nanterre (FR)
(72) Inventeur: Da Costa Pito, Sergio, 95800 CERGY (FR); Brunard, Christophe, 92270 BOIS COLOMBES (FR)
(74) Mandataire: Domenego, Bertrand

(56) Documents cités:
- DE-U1-202006 001 329
- GB-A- 2 213 369
- US-A1- 2002 000 503
- US-A1- 2007 018 064
- US-B1- 6 397 046

## Description

La présente invention concerne un dispositif de support d'un appareil portable, en particulier dans un véhicule automobile, du type comprenant une surface de réception de l'appareil portable et une base de support, destinée à être montée dans le véhicule automobile, ladite surface de réception étant reliée à une tête de forme sensiblement hémisphérique, formant une partie d'une liaison rotule, et ladite base de support comprenant un corps de forme sensiblement hémisphérique, formant l'autre partie de la liaison rotule, une paroi dudit corps présentant une forme sensiblement complémentaire d'une paroi de ladite tête, un élément de blocage mobile empêchant, dans une position de blocage, le mouvement de la tête par rapport au corps.

L'invention concerne également un élément de garnissage de véhicule automobile comprenant un tel dispositif de support.

De plus en plus d'appareils électroniques portables présentant un grand nombre de fonctionnalités sont à disposition des utilisateurs, et notamment des conducteurs de véhicule automobile. En particulier, des appareils du type téléphone portable ou « smartphone », assistant personnel numérique ou PDA (« personnal digital assistant »), système de navigation ou autres permettent par exemple d'aider un conducteur automobile à déterminer un trajet, de l'informer sur l'état du trafic routier ou de l'assister dans la conduite de son véhicule. De tels appareils se commandent par exemple au moyen d'un écran tactile qui doit donc être accessible au conducteur sans pour autant l'obliger à prendre l'appareil en main, ce qui constituerait un danger pour la conduite du véhicule.

Ainsi, il est connu de prévoir un dispositif de support de l'appareil portable à proximité du conducteur, par exemple sur la planche de bord du véhicule automobile, afin d'y maintenir l'appareil en laissant l'écran dégagé pour permettre de le commander sans le prendre en main.

Il est souhaitable qu'un tel dispositif de support permette d'orienter l'appareil portable selon les préférences de l'utilisateur. Notamment, l'appareil portable doit pouvoir être tourné vers le conducteur ou vers le passager du véhicule et être plus ou moins incliné pour permettre une bonne lecture de l'écran. Pour permettre cette orientation, il est par exemple connu de prévoir une liaison rotule entre l'appareil portable et le véhicule automobile, une telle liaison permettant d'orienter facilement l'appareil dans toutes les directions.

Une fois la position de l'appareil portable choisie, il faut que cette position soit maintenue de façon ferme afin d'éviter un déplacement non voulu de l'appareil portable. Pour ce faire, il est par exemple connu de prévoir une certaine force de friction entre les deux éléments de la liaison rotule, de sorte qu'avec un certain effort appliqué par l'utilisateur l'appareil peut être déplacé tandis que la position est maintenue lorsque aucun effort n'est appliqué sur la liaison. Cependant, une telle liaison rotule n'est pas satisfaisante car la force de friction adéquate est difficile à choisir. Si elle est trop importante, l'utilisateur doit faire un effort trop grand pour déplacer l'appareil et si elle est trop faible, l'appareil est susceptible de se déplacer sans qu'aucun effort ne soit exercé sur la liaison rotule. En outre, la force de friction diminue avec le temps, du fait de l'usure de la liaison rotule, de sorte qu'à terme la liaison rotule ne permet plus de maintenir l'appareil portable dans la position voulue. Enfin, les vibrations engendrées par le déplacement du véhicule ou des éléments avoisinant le dispositif de support sont également susceptibles d'empêcher le maintien de la position de l'appareil portable.

Pour pallier ces inconvénients, il est connu de prévoir une liaison rotule comprenant un élément de blocage, qui, lorsqu'il est en position de blocage, empêche le déplacement d'un élément de la liaison rotule par rapport à l'autre. Le document US-6 397 046 décrit par exemple un tel élément de blocage, formé par une vis traversant les éléments de la liaison rotule. Lorsque la vis est desserrée, le support de l'appareil peut être déplacé et lorsque la vis est serrée, le support est fixé. Cependant un tel système est peut pratique à utiliser. En effet, il faut retirer l'appareil portable pour pouvoir accéder à la vis et pouvoir la serrer ou la desserrer au moyen d'un outil. Par conséquent, il est pratiquement impossible de régler la position de l'appareil portable lors des déplacements du véhicule.

L'un des buts de l'invention est de pallier ces inconvénients en proposant un dispositif de support d'un appareil portable simple à utiliser, permettant de régler l'orientation de l'appareil portable et de maintenir efficacement la position de l'appareil une fois qu'elle a été choisie.

A cet effet, l'invention concerne un dispositif de support du type précité, dans lequel l'élément de blocage est fixé à la base de support par des moyens de rappel élastiques et est appliqué contre la tête, les moyens de rappel élastiques et l'élément de blocage poussant la paroi de la tête contre la paroi du corps dans la position de blocage.

Le dispositif de support est particulièrement simple à utiliser par une simple pression contre la surface de réception, ou l'appareil portable lorsqu'il est fixé à ladite surface, permettant de faire passer l'élément de blocage de sa position de blocage à une position de déverrouillage dans laquelle l'orientation de la surface de réception peut être réglée. En outre, un tel dispositif ne présente pas les inconvénients d'une liaison rotule « à friction » décrite ci-dessus.

Selon d'autres caractéristiques du dispositif de support selon l'invention :
- l'élément de blocage est mobile en translation à l'encontre de la force de rappel des moyens de rappel entre la position de blocage et une position de déverrouillage dans laquelle la paroi de la tête est écartée de la paroi du corps de sorte à être mobile par rapport audit corps ;
- la paroi de la tête et la paroi du corps comprennent des moyens d'encliquetages complémentaires, lesdits moyens d'encliquetage coopérant entre eux dans la position de blocage de sorte à verrouiller ladite position de blocage ;
- la surface de réception est reliée à la tête par un arbre saillant de la paroi de la tête, la paroi du corps comprenant une ouverture, ledit arbre saillant de ladite ouverture ;
- l'ouverture s'étend sensiblement en regard de l'élément de blocage, la paroi de la tête étant interposée entre ledit élément de blocage et ladite ouverture ;
- le dispositif comprend des moyens d'actionnement du déplacement de l'élément de blocage entre la position de blocage et la position de déverrouillage ;
- les moyens d'actionnement comprennent une languette mobile en translation, ladite languette prenant appui sur une rampe reliée à l'élément de blocage, le déplacement en translation de la languette entraînant un déplacement en translation de l'élément de blocage à l'encontre de la force de rappel des moyens de rappel de sorte à déplacer l'élément de blocage de sa position de blocage à sa position de déverrouillage ;
- les moyens d'actionnement comprennent une languette mobile en rotation, ladite languette étant reliée à l'élément de blocage par une liaison hélicoïdale, le déplacement en rotation de la languette entraînant un déplacement en translation de l'élément de blocage à l'encontre de la force de rappel des moyens de rappel de sorte à déplacer l'élément de blocage de sa position de blocage à sa position de déverrouillage ; et
- la base de support comprend une surface externe solidaire du corps, les moyens d'actionnement étant mobiles dans une fente s'étendant dans ladite surface externe.

L'invention concerne également un élément de garnissage comprenant une surface externe destinée à s'étendre dans l'habitacle d'un véhicule automobile, ledit élément de garnissage comprenant un dispositif de support tel que décrit ci-dessus, la surface de réception de l'appareil portable s'étendant en regard de ladite surface externe de l'élément de garnissage.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe et de dessus du dispositif de support selon un premier mode de réalisation de l'invention,
- la Fig. 2 est une représentation schématique en coupe et de dessus du dispositif de support selon un deuxième mode de réalisation de l'invention,
- la Fig. 3 est une représentation schématique en coupe et de dessus du dispositif de support selon un troisième mode de réalisation de l'invention.

En référence aux figures, on décrit un dispositif de support 1 d'un appareil e portable 2 permettant d'orienter celui-ci afin d'adapter au mieux la position de son écran pour une meilleure visibilité par les passagers du véhicule. Pour chaque figure, le dispositif 1 est représenté en coupe sur la figure du haut et vu de dessus sur la figure du bas.

Le dispositif de support 1 est adapté à tout type d'appareil portable 2 ou « nomade », mais le dispositif de support 1 est plus particulièrement adapté à des appareils électroniques à écran tactile, du type téléphone portable ou « smartphone », assistant personnel numérique ou PDA (« personnal digital assistant »), système de navigation ou autre. Cette liste d'appareils est donnée à titre d'exemple et n'est en aucun cas limitative.

Le dispositif de support 1 comprend une base de support 4 et une surface de réception 6, à laquelle l'appareil portable 2 est destiné à être fixé, orientable par rapport à la base de support 4. Le dispositif de support 1 est par exemple intégrée à un élément de garnissage (non représenté) de véhicule automobile. Un tel élément de garnissage comprend une surface externe s'étendant dans l'habitacle du véhicule automobile et le dispositif de support est intégré de telle sorte que la surface de réception 6 s'étende sensiblement en regard de cette surface externe de sorte que l'écran de l'appareil portable 2 monté sur la surface de réception 6 soit disposé en regard des passagers du véhicule automobile.

La base de support 4 forme un boîtier 8 comprenant une surface externe 10 et un fond 12 s'étendant en regard de la surface externe 10 sensiblement parallèlement à celle-ci. La surface externe 10 est destinée à s'étendre dans l'habitacle du véhicule automobile, par exemple sensiblement parallèlement à la surface externe de l'élément de garnissage. Selon un mode de réalisation, la surface externe 10 s'étend dans la continuité de la surface externe de l'élément de garnissage, le boîtier 8 étant reçu dans un logement de l'élément de garnissage.

Un corps 14 de forme sensiblement hémisphérique forme une ouverture dans la surface externe 10 de la base de support 4. Le corps 14 s'étend sensiblement perpendiculairement à la surface externe 10 et présente la forme d'une demi-sphère tronquée, comme représenté sur les figures. Le corps 14 s'étend entre une ouverture supérieure 16, de forme circulaire et s'étendant parallèlement à la surface externe 10 en dehors du boîtier 8 ou dans la continuité de la surface externe 10, et une ouverture inférieure 18, de forme circulaire et s'étendant parallèlement à la surface externe 10 entre ladite surface externe 10 et le fond 12 du boîtier. Le corps 14 comprend une paroi interne 20 présentant une forme hémisphérique s'étendant entre les ouvertures supérieure 16 et inférieure 18 et tournée vers le fond 12, comme représenté sur les figures. Ce corps 14 forme ainsi une partie d'une liaison rotule.

L'autre partie de la liaison rotule est formée par une tête 22 de forme sensiblement hémisphérique, complémentaire du corps 14. La tête 22 comprend une paroi externe 24 disposée en regard de la paroi interne 20 du corps 14 et de forme complémentaire à cette paroi interne 20. La tête 22 s'étend entre une ouverture inférieure 26, s'étendant sensiblement parallèlement à l'ouverture inférieure 18 du corps 14 en regard du fond 12, et un arbre 28, s'étendant sensiblement perpendiculairement à la surface externe 10 de la base de support 4 et saillant de l'ouverture supérieure 16 du corps 14. L'arbre 28 s'étend à partir de la paroi externe 24 de la tête 22 vers l'extérieur du boîtier 8. L'extrémité libre de l'arbre 28 forme la surface de réception 6 d'un appareil portable 2 ou porte cette surface de réception 6, si celle-ci est réalisée par une pièce séparée. La tête comprend en outre une paroi interne 30 s'étendant en regard du fond 12 et tournée vers l'ouverture inférieure 26.

Un élément de blocage 32 est fixé à la base de support 4. L'élément de blocage 32 est monté en translation sur une tige 34 s'étendant à partir du fond 12 sensiblement perpendiculairement à celui-ci en regard de l'ouverture supérieure 16 du corps 14. L'élément de blocage 32 comprend une surface d'appui 36 de forme sensiblement complémentaire d'une partie de la paroi interne 30 de la tête 22, ladite surface d'appui 36 étant appliquée contre ladite paroi interne 30 par des moyens de rappel 38, s'étendant autour de la tige 34 entre le fond 12 et l'élément de blocage 32, et agencés pour pousser l'élément de blocage 32 contre la tête 22 sensiblement en regard de l'arbre 28. Ainsi, la paroi externe 24 de la tête 22 est interposée entre l'élément de blocage 32 et l'ouverture supérieure 16 du corps 14. Les moyens de rappel 38 sont par exemple formés par un ressort. La tige 34 s'étend jusque dans le corps 14 en passant par les ouvertures inférieures 18 et 26 du corps 14 et de la tête 22.

Ainsi, lorsque les moyens de rappel 38 ne sont pas sollicités, l'élément de blocage 32 est poussé contre la paroi interne 30 de la tête 22, ce qui a pour effet d'appliquer la paroi externe 24 de la tête 22 contre la paroi interne 20 du corps 14. L'élément de blocage 32 est alors dans une position de blocage.

Dans cette position, la tête 22 est donc bloquée contre le corps 14 par l'élément de blocage 32 et ne peut pas se déplacer par rapport au corps 14. La force de friction entre la paroi externe 24 de la tête 22 et la paroi interne 20 du corps 14 est alors suffisante pour maintenir la position de l'arbre 28 lorsque la surface de réception 6 reçoit un appareil portable 2. Selon le mode de réalisation représenté sur les figures, la position de blocage est en outre verrouillée par des moyens d'encliquetage 40 complémentaires prévus respectivement sur la paroi externe 24 de la tête 22 et sur la paroi interne 20 du corps 14. Ces moyens d'encliquetage 40 coopèrent entre eux dans la position de blocage de sorte à empêcher un mouvement relatif de la tête 22 par rapport au corps 14. Les moyens d'encliquetage 40 sont par exemple formés par une pluralité d'ergots prévus sur la paroi interne 20 du corps 14 et par une pluralité de logements complémentaires prévus dans la paroi externe 24 de la tête 22. Lorsque les ergots sont disposés dans les logements, la position de blocage est verrouillée. Alternativement, les ergots peuvent être prévus sur la paroi externe 24 de la tête 22 et les logements dans la paroi interne 20 du corps 14.

Pour permettre le réglage de l'orientation de l'appareil portable 2 et donc de la surface de réception 6, on déplace l'élément de blocage 32 en translation le long de la tige 34 à l'encontre de la force de rappel des moyens de rappel 38 comme indiqué par les flèches f des figures. Ce déplacement permet d'écarter la paroi externe 24 de la tête 22 de la paroi interne 20 du corps 14, ce qui permet de déplacer la tête 22 par rapport au corps 14 et ainsi d'orienter l'arbre selon toutes les directions, comme représenté par les flèches f' et les traits pointillés des figures.

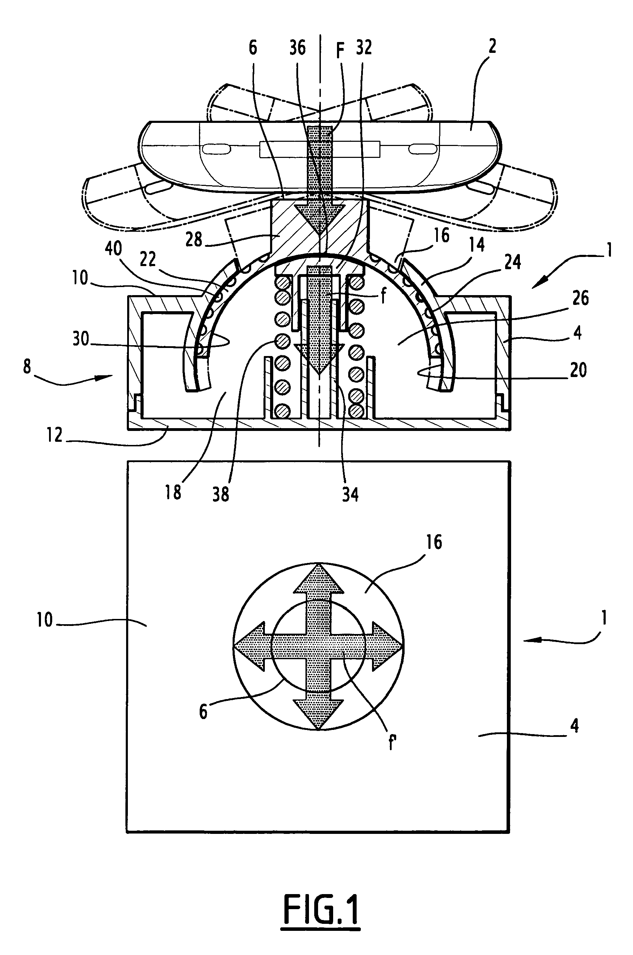

Selon le mode de réalisation représenté sur la Fig. 1, le déplacement de l'élément de blocage 32 se fait par simple pression sur la surface de réception 6 ou sur l'appareil portable 2, lorsqu'il est fixé sur la surface de réception 6, comme indiqué par la flèche F de la Fig. 1. Ainsi, par simple pression contre l'appareil portable 2 vers le fond 12, on peut régler aisément l'orientation de l'appareil portable 2, par relâchement de la pression, les moyens de rappel replacent l'élément de blocage dans la position de blocage afin de fixer l'orientation choisie.

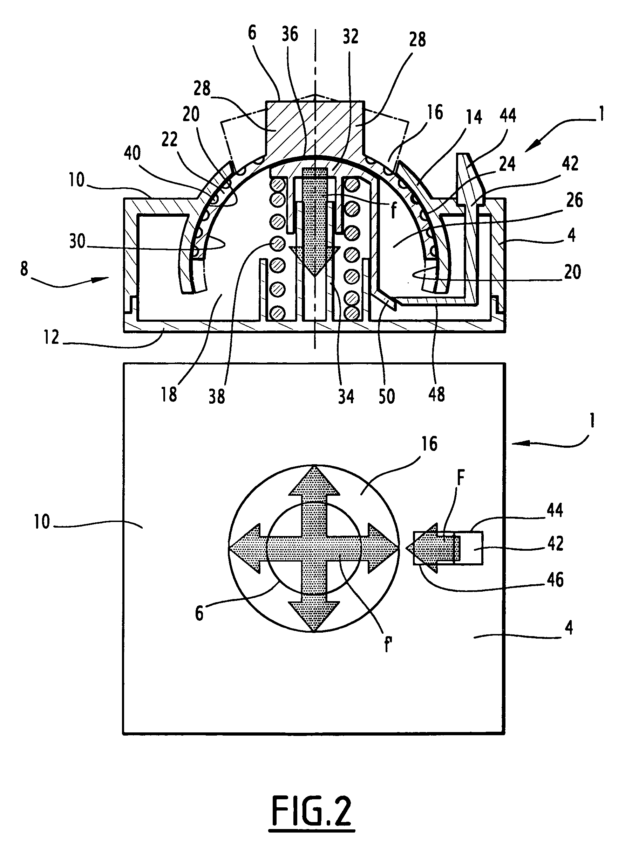

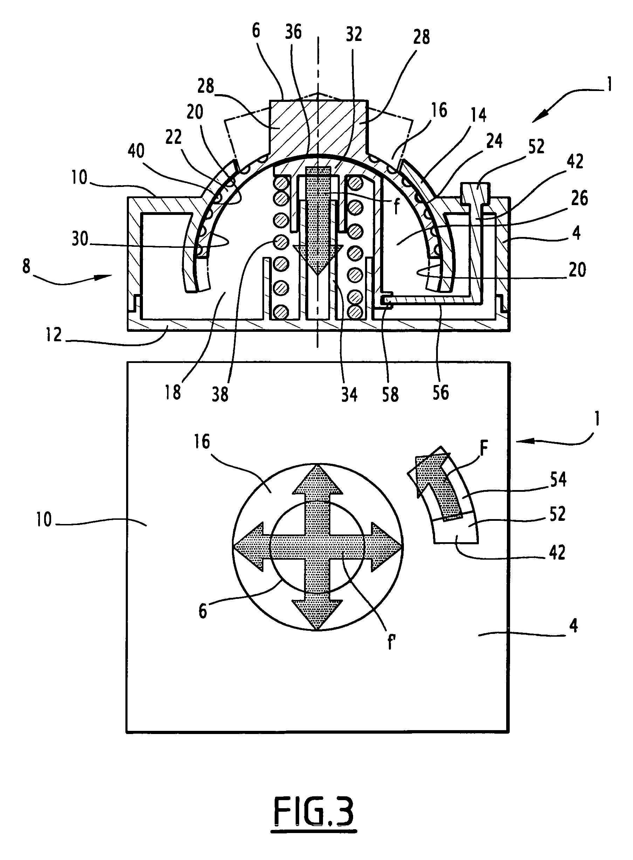

Selon le mode de réalisation représenté sur les Fig. 2 et 3, le déplacement de l'élément de blocage 32 vers sa position de déverrouillage, se fait par des moyens d'actionnement 42.

Selon le mode de réalisation représenté sur la Fig. 2, les moyens d'actionnement 42 sont formés par une languette 44 montée dans une fente 46 sensiblement rectiligne prévue dans la surface externe 10 de la base de support 4. La languette 44 est solidaire d'un décrochement 48 s'étendant sensiblement parallèlement au fond 12 et disposé en appui contre une rampe 50 solidaire de l'élément de blocage 32. La languette 44 est mobile en translation dans la fente 46 selon la flèche F de la Fig. 2. Le déplacement en translation de la languette 44 entraîne un déplacement similaire du décrochement 48 qui appuie sur la rampe 50 qui est agencée pour déplacer l'élément de blocage 32 à l'encontre de la force de rappel des moyens de rappel 38. L'élément de blocage 32 est ainsi positionné en position de déverrouillage et la tête 22 peut être déplacée par rapport au corps 14. Ainsi, l'utilisateur déplace la languette 44 en translation et règle l'orientation de l'appareil portable 2 en maintenant la languette 44 déplacée. En relâchant la languette 44, l'élément de blocage 32 retourne dans sa position de blocage grâce aux moyens de rappel 38.

Selon le mode de réalisation représenté sur la Fig. 3, les moyens d'actionnement 42 sont formés par une languette 52 montée dans une fente 54 incurvée prévue dans la surface externe 10 de la base de support 4. La languette 52 est solidaire d'un décrochement 56 s'étendant sensiblement parallèlement au fond 12 et relié à l'élément de blocage 32 par une liaison hélicoïdale 58, par exemple du type filetage. La languette 52 est mobile en rotation dans la fente 54 selon la flèche F de la Fig. 3. Le déplacement en rotation de la languette 52 entraîne un déplacement de l'élément de blocage 32 à l'encontre de la force de rappel des moyens de rappel 38 grâce à la liaison hélicoïdale 58. L'élément de blocage 32 est ainsi positionné en position de déverrouillage et la tête 22 peut être déplacée par rapport au corps 14. Ainsi, l'utilisateur déplace la languette 52 en rotation et règle l'orientation de l'appareil portable 2 en maintenant la languette 52 déplacée. En relâchant la languette 52, l'élément de blocage 32 retourne dans sa position de blocage grâce aux moyens de rappel 38.

Le dispositif de support 1 décrit ci-dessus est particulièrement peu encombrant, l'élément de blocage 32 étant disposé dans le boîtier 8.

En outre, le dispositif de support 1 peut être actionné entre la position de blocage et la position de déverrouillage même lorsqu'un appareil portable 2 est fixé sur la surface de réception 6, ce qui permet une utilisation particulièrement simple du dispositif.

Le dispositif de support 1 permet un maintien efficace de l'appareil portable 2, la position de blocage étant réalisée notamment par les moyens de rappel 38 et non par la seule force de friction entre les deux éléments de la liaison rotule.

Enfin, le dispositif de support 1 offre un grand choix dans l'orientation de l'appareil portable portable 2, la liaison rotule 22 permettant d'orienter la surface de réception 6 dans toutes les directions.

## Revendications

1. Dispositif de support (1) d'un appareil portable (2), en particulier dans un véhicule automobile, comprenant une surface de réception (6) de l'appareil portable (2) et une base de support (4), destinée à être montée dans le véhicule automobile, ladite surface de réception (6) étant reliée à une tête (22) de forme sensiblement hémisphérique, formant une partie d'une liaison rotule, et ladite base de support (4) comprenant un corps (14) de forme sensiblement hémisphérique, formant l'autre partie de la liaison rotule, une paroi (20) dudit corps (14) présentant une forme sensiblement complémentaire d'une paroi (24) de ladite tête (22), un élément de blocage (32) mobile empêchant, dans une position de blocage, le mouvement de la tête (22) par rapport au corps (14), **caractérisé en ce que** l'élément de blocage (32) est fixé à la base de support (4) par des moyens de rappel élastiques (38) et est appliqué contre la tête (22), les moyens de rappel élastiques (38) et l'élément de blocage (32) poussant la paroi (24) de la tête (22) contre la paroi (20) du corps (14) dans la position de blocage, la tête (22) comprenant une ouverture inférieure (26), l'élément de blocage (32) étant appliqué entre la paroi de la tête (24) en passant par ladite ouverture inférieure (26).

2. Dispositif de support selon la revendication 1, **caractérisé en ce que** l'élément de blocage (32) est mobile en translation à l'encontre de la force de rappel des moyens de rappel (38) entre la position de blocage et une position de déverrouillage dans laquelle la paroi (24) de la tête (22) est écartée de la paroi (20) du corps (14) de sorte à être mobile par rapport audit corps (14).

3. Dispositif de support selon la revendication 1 ou 2, **caractérisé en ce que** la paroi (24) de la tête (22) et la paroi (20) du corps (14) comprennent des moyens d'encliquetages (40) complémentaires, lesdits moyens d'encliquetage (40) coopérant entre eux dans la position de blocage de sorte à verrouiller ladite position de blocage.

4. Dispositif de support selon l'une quelconque des revendications 1 à 3, **caractérisé en ce que** la surface de réception (6) est reliée à la tête (22) par un arbre saillant (28) de la paroi (24) de la tête (22), la paroi (20) du corps (14) comprenant une ouverture (16), ledit arbre (28) saillant de ladite ouverture (16).

5. Dispositif de support selon la revendication 4, **caractérisé en ce que** l'ouverture (16) s'étend sensiblement en regard de l'élément de blocage (32), la paroi (24) de la tête (22) étant interposée entre ledit élément de blocage (32) et ladite ouverture (16).

6. Dispositif de support selon l'une quelconque des revendication 1 à 5, **caractérisé en ce qu'**il comprend des moyens d'actionnement (42) du déplacement de l'élément de blocage (32) entre la position de blocage et la position de déverrouillage.

7. Dispositif de support selon la revendication 6, **caractérisé en ce que** les moyens d'actlonnement (42) comprennent une languette (44) mobile en translation, ladite languette (44) prenant appui sur une rampe (50) reliée à l'élément de blocage (32), le déplacement en translation de la languette (44) entrainant un déplacement en translation de l'élément de blocage (32) à l'encontre de la force de rappel des moyens de rappel (38) de sorte à déplacer l'élément de blocage (32) de sa position de blocage à sa position de déverrouillage.

8. Dispositif de support selon la revendication 6, **caractérisé en ce que** les moyens d'actionnement (42) comprennent une languette (52) mobile en rotation, ladite languette (52) étant reliée à l'élément de blocage (32) par une liaison hélicoïdale (58), le déplacement en rotation de la languette (52) entraînant un déplacement en translation de l'élément de blocage (32) à l'encontre de la force de rappel des moyens de rappel (38) de sorte à déplacer l'élément de blocage (32) de sa position de blocage à sa position de déverrouillage.

9. Dispositif de support selon l'une quelconque des revendications 6 à 8, **caractérisé en ce que** la base de support (4) comprend une surface externe (10) solidaire du corps (14), les moyens d'actionnement (42) étant mobiles dans une fente (46, 54) s'étendant dans ladite surface externe (10).

10. Elément de garnissage de véhicule automobile comprenant une surface externe destinée à s'étendre dans l'habitacle du véhicule automobile, ledit élément de garnissage comprenant un dispositif de support selon (1) l'une quelconque des revendications 1 à 9, la surface de réception (6) de l'appareil portable (2) s'étendant en regard de ladite surface externe de l'élément de garnissage.

## Patentansprüche

1. Vorrichtung zum Halten (1) eines tragbaren Geräts (2), insbesondere in einem Kraftfahrzeug, aufweisend eine Fläche zum Aufnehmen (6) des tragbaren Geräts (2) und eine Haltebasis (4), die dazu vorgesehen ist, in dem Kraftfahrzeug montiert zu sein, wobei die Fläche zum Aufnehmen (6) mit einem im Wesentlichen halbkugelförmigen Kopf (22) verbunden ist, welcher einen Teil einer Kugelgelenkverbindung bildet, und wobei die Haltebasis (4) einen im Wesentlichen halbkugelförmigen Körper (14) aufweist, welcher den anderen Teil der Kugelgelenkverbindung bildet, wobei eine Wand (20) des Körpers (14) eine zu einer Wand (24) des Kopfes (22) im Wesentlichen komplementäre Form aufweist, wobei ein bewegbares Blockierelement (32) in einer Blockierposition die Bewegung des Kopfes (22) bezüglich des Körpers (14) verhindert,
**dadurch gekennzeichnet, dass**
das Blockierelement (32) an der Haltebasis (4) mittels elastischen Rückstellmitteln (38) angebracht ist und gegen den Kopf (22) wirkt, wobei die elastischen Rückstellmittel (38) und das Blockierelement (32) in der Blockierposition die Wand (24) des Kopfes (22) gegen die Wand (20) des Körpers (14) drängen, wobei der Kopf (22) eine untere Öffnung (26) aufweist, wobei das Blockierelement (32) durch die untere Öffnung (26) passierend an der Wand des Kopfes (24) wirkt.

2. Vorrichtung zum Halten gemäß Anspruch 1, **dadurch gekennzeichnet, dass** das Blockierelement (32) gegen die Rückstellkraft der Rückstellmittel (38) zwischen der Blockierposition und einer Freigabeposition translationsbewegbar ist, in welcher die Wand (24) des Kopfes (22) von der Wand (20) des Körpers (14) entfernt ist, so dass sie bezüglich des Körpers (14) bewegbar ist.

3. Vorrichtung zum Halten gemäß Anspruch 1 oder 2, **dadurch gekennzeichnet, dass** die Wand (24) des Kopfes (22) und die Wand (20) des Körpers (14) komplementäre Rastmittel (40) aufweisen, wobei die Rastmittel (40) in der Blockierposition miteinander derart zusammenwirken, dass sie die Blockierposition verriegeln.

4. Vorrichtung zum Halten gemäß einem der Ansprüche 1 bis 3, **dadurch gekennzeichnet, dass** die Fläche zum Aufnehmen (6) mit dem Kopf (22) durch einen von der Wand (24) des Kopfes (22) vorstehenden Vorsprung (28) verbunden ist, wobei die Wand (20) des Körpers (14) eine Öffnung (16) aufweist, wobei der Vorsprung (28) von der Öffnung (16) vorsteht.

5. Vorrichtung zum Halten gemäß Anspruch 4, **dadurch gekennzeichnet, dass** sich die Öffnung (16) im Wesentlichen dem Blockierelement (32) gegenüberliegend erstreckt, wobei die Wand (24) des Kopfes (22) zwischen dem Blockierelement (32) und der Öffnung (16) angeordnet ist.

6. Vorrichtung zum Halten gemäß einem der Ansprüche 1 bis 5, **dadurch gekennzeichnet, dass** sie Betätigungsmittel (42) zum Bewegen des Blockierelements (32) zwischen der Blockierposition und der Freigabeposition aufweist.

7. Vorrichtung zum Halten gemäß Anspruch 6, **dadurch gekennzeichnet, dass** die Betätigungsmittel (42) eine translationsbewegbare Zunge (44) aufweisen, wobei die Zunge (44) auf einer Rampe (50), welche mit dem Blockierelement (32) verbunden ist, abgestützt ist, wobei die Translationsbewegung der Zunge (44) eine Translationsbewegung des Blockierelements (32) gegen die Rückstellkraft der Rückstellmittel (38) verursacht, so dass das Blockierelement (32) von seiner Blockierposition in seine Freigabeposition bewegt wird.

8. Vorrichtung zum Halten gemäß Anspruch 6, **dadurch gekennzeichnet, dass** die Betätigungsmittel (42) eine drehbewegbare Zunge (52) aufweisen, wobei die Zunge (52) mit dem Blockierelement mittels einer Schraubenverbindung (58) verbunden ist, wobei die Rotationsbewegung der Zunge (52) eine Translationsbewegung des Blockierelements (32) gegen die Rückstellkraft der Rückstellmittel (38) verursacht, so dass das Blockierelement (32) von seiner Blockierposition in seine Freigabeposition bewegt wird.

9. Vorrichtung zum Halten gemäß einem der Ansprüche 6 bis 8, **dadurch gekennzeichnet, dass** die Haltebasis (4) eine Außenfläche (10) aufweist, welche integral mit dem Körper (14) ist, wobei die Betätigungsmittel (42) in einem Schlitz (46,54), welcher sich in der Außenfläche (10) erstreckt, bewegbar sind.

10. Verkleidungselement eines Kraftfahrzeugs, aufweisend eine Außenfläche, welche dafür vorgesehen ist, sich in dem Fahrgastraum des Kraftfahrzeugs zu erstrecken, wobei das Verkleidungselement eine Vorrichtung zum Halten (1) gemäß einem der Ansprüche 1 bis 9 aufweist, wobei sich die Fläche zur Aufnahme (6) des tragbaren Geräts (2) der Außenfläche des Verkleidungselements gegenüberliegend erstreckt.

## Claims

1. Support arrangement (1) for a portable device (2), in particular in a motor vehicle, comprising a receiving surface (6) for the portable device (2) and a support base (4) intended to be installed in the motor vehicle, wherein said receiving surface (6) is connected to a substantially hemispherical head (22) forming one part of a ball linkage and said support base (4) comprises a substantially hemispherical body (14) forming the other part of the ball linkage, a wall (20) of said body (14) having a substantially complementary shape to a wall (24) of said head (22), wherein in a locking position, a movable locking element (32) prevents the head (22) from moving in relation to the body (14), **characterised in that** the locking element (32) is fixed to the support base (4) by elastic restoring means (38) and is applied against the head (22), wherein the elastic restoring means (38) and the locking element (32) push the wall (24) of the head (22) against the wall (20) of the body (14) in the locking position, wherein the head (22) comprises a lower opening (26) and the locking element (32) is applied between the wall of the head (24) passing through said lower opening (26).

2. Support arrangement according to claim 1, **characterised in that** the locking element (32) is movable in a translatory manner against the restoring force of the restoring means (38) between the locking position and a releasing position, in which the wall (24) of the head (22) is moved away from the wall (20) of the body (14) in order to be movable in relation to said body (14).

3. Support arrangement according to claim 1 or 2, **characterised in that** the wall (24) of the head (22) and the wall (20) of the body (14) comprise complementary catch means (40), wherein said catch means (40) cooperate with one another in the locking position in order to lock said locking position.

4. Support arrangement according to any one of claims 1 to 3, **characterised in that** the receiving surface (6) is connected to the head (22) by a shaft (28) projecting from the wall (24) of the head (22) and the wall (20) of the body (14) comprises an opening (16), wherein said shaft (28) projects from said opening (16).

5. Support arrangement according to claim 4, **characterised in that** the opening (16) extends substantially facing the locking element (32) and the wall (24) of the head (22) is interposed between said locking element (32) and said opening (16).

6. Support arrangement according to any one of claims 1 to 5, **characterised in that** it comprises means (42) to actuate the displacement of the locking element (32) between the locking position and the releasing position.

7. Support arrangement according to claim 6, **characterised in that** the actuation means (42) comprise a tongue (44) that is movable in a translatory manner, wherein said tongue (44) and rests on a ramp (50) connected to the locking element (32), wherein the translatory displacement of the tongue (44) causes a translatory displacement of the locking element (32) against the restoring force of the restoring means (38) in order to displace the locking element (32) from its locking position into its releasing position.

8. Support arrangement according to claim 6, **characterised in that** the actuation means (42) comprise a tongue (52) that is movable in a translatory manner and said tongue (52) is connected to the locking element (32) by a helicoid linkage (58), wherein the rotational displacement of the tongue (44) causes a translatory displacement of the locking element (32) against the restoring force of the restoring means (38) in order to displace the locking element (32) from its locking position into its releasing position.

9. Support arrangement according to any one of claims 6 to 8, **characterised in that** the support base (4) comprises an outer surface (10) integral to the body (14) and the actuation means (42) are movable in a slot (46, 54) that extends in said outer surface (10).

10. Motor vehicle lining element comprising an outer surface intended to extend into the passenger compartment of the motor vehicle, wherein said lining element comprises a support arrangement (1) according to any one of claims 1 to 9, wherein the surface (6) for receiving the portable device (2) extends facing said outer surface of the lining element.
